# EUROPEAN PATENT SPECIFICATION

(11) **EP 2 830 737 B1**
(45) Date of publication and mention of the grant of the patent: **23.10.2019**
(21) Application number: 13768779.4
(22) Date of filing: 28.03.2013
(51) Int. Cl.: B01D 53/14

(54) **CARBON CAPTURE SOLVENTS AND METHODS FOR USING SUCH SOLVENTS**
KOHLENSTOFFABSCHEIDUNGSLÖSUNGSMITTEL UND VERFAHREN ZUR VERWENDUNG DERARTIGER LÖSUNGSMITTELN
SOLVANTS DE CAPTURE DE CARBONE ET PROCÉDÉS POUR UTILISER CES SOLVANTS

(43) Date of publication of application: 04.02.2015
(73) Proprietor: Carbon Clean Solutions Limited, 34 Bridge Street Reading RG1 2LU (GB)
(72) Inventor: BUMB, Prateek, Jaipur (Rajasthan) - 302018 (IN); VAIDYA, Prakash D., Matunga Mumbai 400019 (IN)
(74) Representative: Bond, Christopher William
(86) International application number: PCT/IB2013/001357
(87) International publication number: WO 2013/144730

(56) References cited:
- EP-A1- 2 283 911
- WO-A1-2011/014955
- US-A- 4 705 673
- US-A1- 2006 117 954
- US-A1- 2009 199 713
- US-A1- 2011 116 997
- US-A1- 2011 171 093
- US-B2- 8 034 166

## Description

### BACKGROUND

This disclosure relates to a method for the preparation of solvents and methods for treatment of industrial effluent gases, and, more specifically, this disclosure relates to solvents and process for using these solvents to aid in the removal of carbon dioxide (CO₂) from other sources such as power plants or industrial utility.

Document US 2009 / 199713 A1 is mentioned as prior art and is directed to an absorption medium and a process for removing carbon dioxide from a gas stream.

### SUMMARY

This disclosure is directed to a solvent for recovery of carbon dioxide from gaseous mixture having at least amine, wherein the amine is 2- amino-2-methyl-1,3-propanediol (APMD), and at least one salt, wherein the salt is potassium taurate. The specific solvent contains less than about 75% by weight of water and has a single liquid phase. The molar concentration of AMPD is between 0.5 M to 4 M and the total molar concentration of potassium taurate is 0.1 M to 3.5 M.

Other solvent compositions not having the preceding characteristics are illustrated only for better illustration of the present invention.

Additional features of the disclosure will become apparent to those skilled in the art upon consideration of the following detailed description of illustrative embodiments exemplifying the best mode of carrying out the disclosure as presently perceived.

### BRIEF DESCRIPTION OF THE DRAWINGS

The detailed description particularly refers to the accompanying figures in which:
FIG. 1 is a schematic picture of the reaction,
FIG. 2 is a perspective view of one illustrative embodiment,
Fig. 3A shows a graph of reaction rate as a function of an exemplary hindered amine concentration at lower concentrations,
Fig. 3B shows a graph of reaction rate as a function of an exemplary hindered amine concentration at higher concentrations,
Fig. 4 shows a graph of the reaction rate as a function of an exemplary amino acid salt at various concentrations of taurate salt,
Fig. 5A shows a graph of the reaction rate as a function of an exemplary hindered amine at 2 M and an exemplary salt at various concentrations,
Fig. 5B shows a graph of the reaction rate as a function of the blend of hindered amine (AMPD), taurine salt comparatively with AMPD and Potassium taurate alone as a function of pressure of CO2,
Fig. 6 shows vapor liquid equilibrium data for AMPD-potassium taurate-CO2-water system.

### DEFINITIONS

As used herein, the term "solvent" can refer to a single solvent or a mixture of solvents.

### DETAILED DESCRIPTION

This disclosure includes several aspects and provides methods and solvents that, when used alone or in combination, may significantly reduce or eliminate carbon dioxide (CO₂) emissions from industrial plants that burn solid fuels, particularly coal-fired power plants. This disclosure is directed to CO₂ capture/sequestration from flue gases CO₂ emissions should also be applicable to CO₂ capture from gas and oil fired boilers, combined cycle power plants, coal gasification, and hydrogen plants, biogas plants.

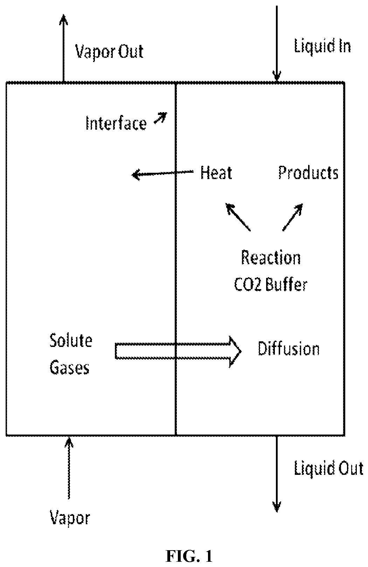

As shown in FIG. 1, the vapor and liquid phases are contact in a small cross-section. In treating the emissions, the absorption step involves removal of acid gases and other components from the gas phase by transport into the liquid phase. The gas-liquid interface separates the phases. An absorbing gas dissolves into the liquid at the interface, then diffuses across a thin layer of liquid (termed the diffusion layer) of one specific solvent. As it diffuses, the gas meets the reactive absorbent component in one specific solvent, reacts with it, and generates heat and reaction products such as carbonate. Reaction products can diffuse into the bulk liquid while the liberated heat of reaction heats the liquid. In one example, there is a mixture of amines, amino acids or salts thereof, a dissolving medium of water as to solvent system remain as a single liquid phase in removing acidic gases from gaseous mixture. In one another example, there is a mixture of tertiary amine/hindered amine, amino acids derivatives, a dissolving medium of water as to solvent system remain as a single liquid phase in removing acidic gases from gaseous mixture.

In one embodiment, the hindered amine compound can be any suitable secondary hindered amine compound (i.e., a hindered amine compound having a hydrogen atom bonded to the nitrogen atom of the amine group). The term "hindered amine" refers to a compound or moiety in which the carbon atoms adjacent to the nitrogen atom of the amine group do not have a hydrogen atom attached directly thereto. The carbon atoms adjacent to the nitrogen atom of the hindered amine compound or moiety may not be carbonyl carbons (i.e., a carbon atom having an oxygen atom double bonded thereto).

One specific solvent may contain hindered or tertiary amines that act as high CO2 loading carrier as the base solvent to increase the capacity of the CO2 capture solvent. Hindered amine / tertiary amine may be N-methyldiethanolamine (MDEA), 2-amino-2methyl-1-proponal (AMP), 2-(diethylamino)-ethanol (DEAE), , diisopropanolamine (DIPA), methylaminopropylamine (MAPA), 3-aminopropanol (AP), 2,2-dimethyl-1,3-propanediamine (DMPDA), 3-amino-1-cyclohexylaminopropane (ACHP), diglycolamine (DGA), 1-amino-2-propanol (MIPA), 2-methyl-methanolamine (MMEA); Di ethyl ethanol amine (DEEA)

In one embodiment, one specific solvent for recovery of carbon dioxide from gaseous mixture includes at least one hindered amine and at least one amino acid, amino acid derivative, amino sulfonic acids or salt thereof. The remaining solvent may be water.

In one embodiment, the solvent contained "amino acids" or salts thereof (e.g., alkali metal salt) that were naturally occurring and non-natural amino acids, as well as amino acid analogs (e.g., taurate) and amino acid mimetics that function in a manner similar to the naturally occurring amino acids. These amino acids may be selected from the 20 common amino acids (alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, and valine) and pyrolysine and selenocysteine. Amino acid analogs refers to compounds that have the same basic chemical structure as a naturally occurring amino acid, by way of example only, an alpha-carbon that is bound to a hydrogen, a carboxyl group, an amino group, and an R group. Such analogs may have modified R groups (by way of example, norleucine) or may have modified peptide backbones, while still retaining the same basic chemical structure as a naturally occurring amino acid. Non-limiting examples of amino acid analogs include homoserine, norleucine, methionine sulfoxide, methionine methyl sulfonium.

In another embodiment, a taurate is also included in the solvent. Taurine is an amino acid having the chemical formula H₂NCH₂CH₂SO₃H. Taurate is the anionic form of taurine. It is understood that taurine and taurate may exist in equilibrium in solution. Taurates are generally based on taurine, which is also known as 2-aminoethanesulfonic acid. In certain embodiments, suitable taurates may have carbon chains in the range of from C₆ to C₁₈. Examples of suitable taurates include N-alkyl-N-acyl taurate, such as N-methyl-N-palmitoyl taurate, N-methyl-N-cocoyl taurate, N-methyl-N-oleyl taurate, and their lauroyl, myristoyl, and stearoyl homologs. An example taurate comprises N-methyl-N-cocoyl taurate. In some embodiments, the taurate may comprise a metal salt of the N-alkyl taurate. A variety of metal salts of the taurate may be used, including, but not limited to, sodium salts, ammonium salts, potassium salts, calcium salts, and combinations thereof.

In another embodiment, the salt can be of an amino sulfonic acids.

In another embodiment, amino acid, amino derivatives or taurate can be provided in the solvent in the form of a salt, for example, a metal salt, such as the sodium salt. However, the taurate may conceivably be provided in the acid form (taurine). The salts thereof, e.g., potassium and lithium salts and other salts of these compounds, can be prepared without difficulties.

One specific solvent may contain a carbonate salt or buffer. The pH may range for a carbonate buffer may be between 8.0 and 9.0 or between 8 and 11. The amount of carbonate buffer salt used in the buffer system is an amount that is sufficient, when used with the remaining components, to raise salivary pH to a pH of about 7.8 or more, about 8.5 or more, and about 9 or more (e.g., about 9-11), irrespective of the starting pH.For example, carbonate in one specific solvent increases the pH of one specific solvent. This high pH allows for increased carbon dioxide capture in the form of bicarbonate salts. The carbonate can be regenerated when one specific solvent is heated. In some instances percarbonate may contribute to the buffer system.

In another embodiment, the carbonate salt is selected from the group consisting of sodium carbonate, potassium carbonate, calcium carbonate, ammonium carbonate, and magnesium carbonate. In yet another embodiment, the bicarbonate salt is selected from the group consisting of sodium bicarbonate, potassium bicarbonate, calcium bicarbonate, ammonium bicarbonate, and magnesium bicarbonate. In one embodiment, the binary buffer system comprises sodium carbonate and sodium bicarbonate. In another embodiment, the sodium bicarbonate is dessicant-coated sodium bicarbonate.

In another embodiment, the amine-based solvents (such as low CO2 loading capacity, high energy requirement for regeneration, and low resistance to solvent degradation and corrosion) includes AMPD + potassium taurate Salt + H₂O mixtures for enhanced CO₂ capture. AMPD is a sterically hindered amine with high CO₂ loading capacity, whereas taurate salt has high reactivity with CO₂ and improved resistance to oxidative degradation. The proposed mixture provides high CO₂ removal rate, high CO₂ loading capacity, low solvent regeneration cost and increased resistance to degradation.

In an embodiment of the present disclosure, the reactivity of the solvent mixture with CO₂ is higher than that of AMPD+H2O or Taurate+H2O mixtures.

In one example, one specific solvent and method of use for the removal of CO₂ from flue gas, natural gas, hydrogen gas, synthesis gas, and other process and waste gas streams. One specific solvent may contain a carbonate buffer, at least one hindered amine, resulting in the solution pH between (about 10 - about 13.5) in absence of CO₂. The amino acids can be 6 wt% to 40 wt% with the total concentration limited by the solid solubility of the amino acids in aqueous solution or of the carbonate buffer salt from 0.15 wt% - 10 wt% with total concentration limited by the solid solubility in aqueous solution. This chemical solvent can be designed to increase the rate of CO₂ removal to improve the efficiency of a removal process.

In yet another embodiment, one specific solvent has a hindered amine in a concentration between about 0.5 M to about 4 M. In some examples, the hindered amine can be in a concentration from about 1 M to about 3.5 M. In some examples, the hindered amine can be in a concentration from about 1.5 M to about 3 M. In some examples, the hindered amine can be in a concentration of about 3M In some examples, the salt of amino acid, amino acid derivative or the taurate from about 0.1 - 3.5 M or from 1 M - 2.5 M.

In yet another embodiment, one specific solvent has a solute concentration between about 2 wt% - 40 w

In yet another embodiment, one specific solvent has a tertiary balance to keep one specific solvent or solvent system as a single liquid phase. The amount of amino acid can depend in the solutions ability to maintain a single liquid phase.

In another embodiment, a method of removing CO₂ from a gaseous stream including: contacting a gaseous stream with a solution wherein the solution is formed by combining: hindered amines, amino acids salt, and water; whereby the contact removes CO₂ from the gaseous stream; and regenerating the solution. The concentrations may be limited by the solubility of the components at a temperature and contact of the exhaust gaseous stream with one specific solvent removes CO₂ from the gaseous stream; and regenerating the solution.

The regenerating may include heating CO₂-rich solution, which may occur at a temperature of approximately 90 C - 130 C, approximately 110 C. An additive such as an antifoaming agent, an antioxidant, a corrosion inhibitor (e.g. vanadium oxide or a chromate), a flocculation aid, or a mixture of two or more additives may be included as part of the solution.

In another embodiment, the method of removing CO₂ from a gaseous stream may further include applying a water wash system, wherein the water wash system collects the volatile hindered amines and amino acids from treated gaseous stream. The regeneration of the solution may occur in a vacuum stripper column, and the solution may be returned to contact with the gaseous stream after regeneration.

Other components of a gaseous stream, such as COS may also be removed by the method of this disclosure. The gaseous stream may be from a coal-fired power plant, or it may be flue gas, natural gas, hydrogen gas, synthesis gas or a waste gas stream.

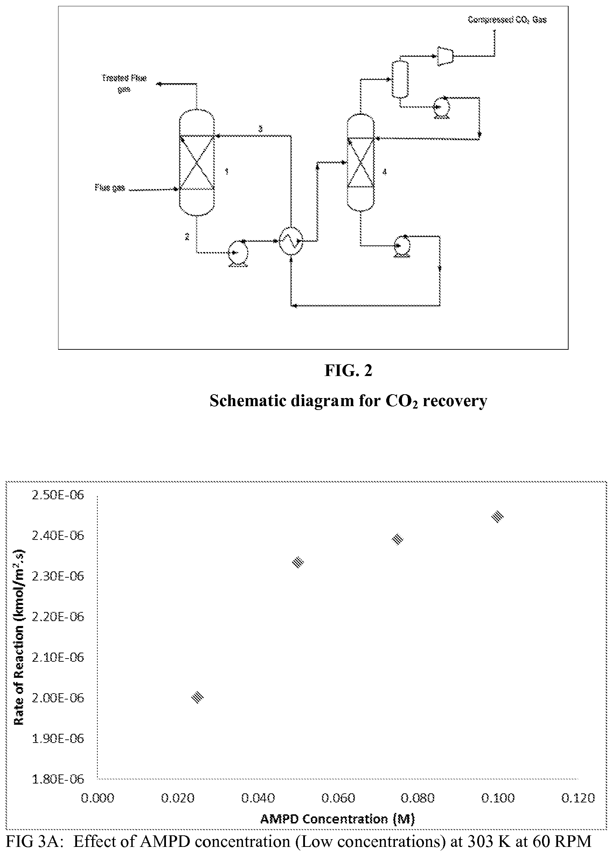

Fig. 2 is a schematic diagram of an apparatus for removing acidic gases especially CO₂. As shown in Fig. 2, gas is allowed to enter to an absorption tower 1 through a CO₂ - containing gas-feed. In a packed portion, the gas placed in the absorption tower 1 is brought into contact in a counter flow with a CO₂ absorbent liquid fed from 3, and CO₂ is absorb and removed from the gas by the absorbing liquid, and the resultant gas is discharge from the top as treated gas. The absorbent liquid fed to the absorption tower 1 absorb CO₂, and is led to heat exchanger and heated and led to a regeneration tower 4. In the regeneration tower 4, the absorbent liquid flows through a packed portion towards the lower portion of the tower. During this time, CO₂ is removed to regenerate the absorbent liquid. The regenerated absorbent liquid is led by a pump to the heat exchanger and fed back to the absorption tower 1 through an absorbent liquid feed inlet line 3.

On the other hand, in the upper portion of the regeneration tower 4, the CO₂ removed from the absorbent liquid is brought into contact with a reflux water, and cooled by a regeneration tower reflux condenser and, in a reflux drum, the CO₂ separated from the reflux water formed by condensing water vapor accompanying the CO₂, and led to a CO₂ recovery step. The reflux water is fed by a reflux water pump to the regenerator tower 4. This embodiment briefly describes an overview of the CO₂ capture process description.

### EXAMPLES

The disclosure will be further described in connection with the following examples, which are set forth for purposes of illustration only.

### Example A:

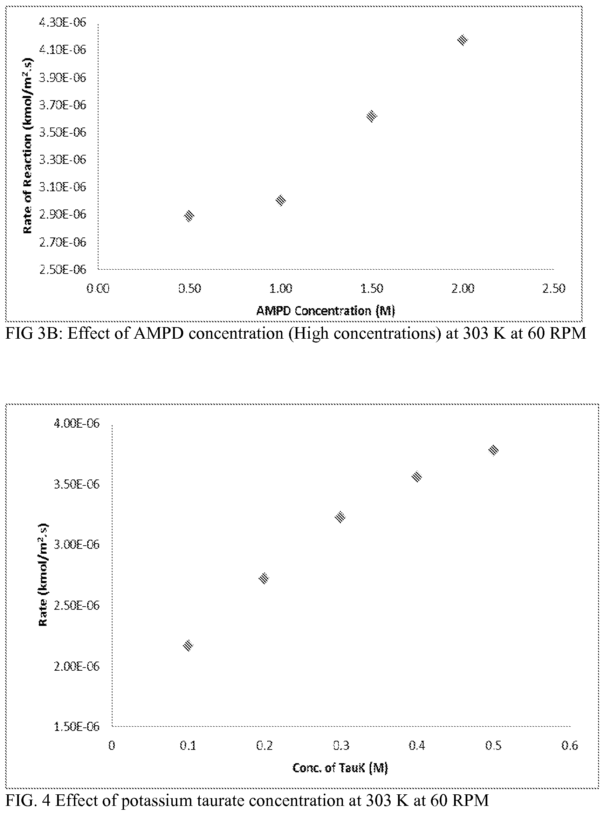

For an exemplary AMPD-CO₂ system, the effect of concentration at low AMPD concentrations and at high AMPD concentrations is shown in Fig. 3A and Fig. 3B, respectively. Table 1 and Table 2 provide the data showing these effects. The effect of CO₂ pressure at low AMPD concentrations as well as at high AMPD concentrations was studied. The rate increases with a rise in amine concentration.

**Table 1 Effect of AMPD concentration (Low concentrations) at 303 K at 60 RPM**

| **Pressure** | **AMPD Concentration** | **Rate of reaction** |
|---|---|---|
| **kPa** | **M** | **kmol/m².s** |
| **6.42** | 0.025 | 2.00E-06 |
| **6.11** | 0.050 | 2.33E-06 |
| **4.17** | 0.075 | 2.39E-06 |
| **6.61** | 0.100 | 2.45E-06 |

**Table 2: Effect of AMPD concentration (High concentrations) at 303 K at 60 RPM**

| **Pressure** | **AMPD Concentration** | **Rate of reaction** |
|---|---|---|
| **kPa** | **M** | **kmol/m².s** |
| **3.89** | 0.50 | 2.89E-06 |
| **3.74** | 1.00 | 3.00E-06 |
| **4.13** | 1.50 | 3.61E-06 |
| **4.8** | 2.00 | 4.17E-06 |

### Potassium taurate-CO₂ system

For an exemplary taurate-CO₂ system, the effect of concentration at various taurate concentrations is shown in Fig. 4, and Table 3 provides the data showing these effects.

**Table 3: Effect of potassium taurate concentration at 303 K at 60 RPM.**

| **Pressure** | **TauK concentration** | **Rate** |
|---|---|---|
| **kPa** | **M** | **kmol/m².s** |
| | | |
| **4.48** | 0.1 | 2.17E-06 |
| **3.71** | 0.2 | 2.72E-06 |
| **4.02** | 0.3 | 3.22E-06 |
| **5.29** | 0.4 | 3.56E-06 |
| **5.32** | 0.5 | 3.78E-06 |

### AMPD-Potassium taurate-CO₂ system

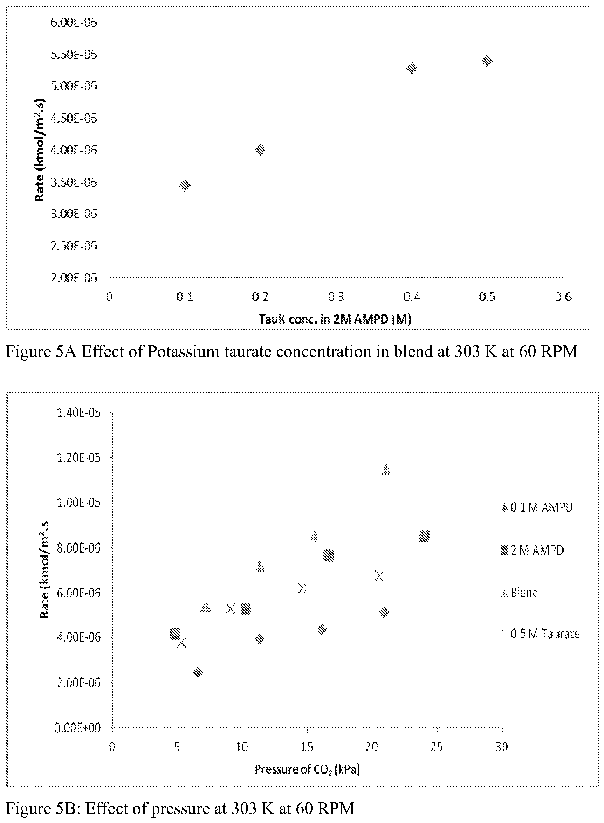

The effect of potassium taurate concentration on CO₂ absorption rate was shown in Table 4 and Fig. 5A. Blend solutions having AMPD concentration of 2 M and potassium taurate concentration ranging from 0.1 M to 0.5 M were examined to calculate the rate of absorption. Potassium taurate is an effective activator in aqueous AMPD solutions.

**Table 4 Effect of Potassium taurate concentration in blend at 303 K at 60 RPM**

| **Pressure** | **AMPD Concentration** | **Taurate concentration** | **Rate** |
|---|---|---|---|
| **kPa** | **M** | **M** | **kmol/m².s** |
| | | | |
| **3.87** | 2 | 0.1 | 3.45E-06 |
| **4.91** | 2 | 0.2 | 4.00E-06 |
| **5.33** | 2 | 0.4 | 5.28E-06 |
| **7.18** | 2 | 0.5 | 5.39E-06 |

Effect of pressure for 0.1 M AMPD, 2 M AMPD, 0.5 M potassium taurate and blend of 2 M AMPD with 0.5 potassium taurate is shown in Table 5 and Fig. 5B.

**Table 5 Effect of pressure at 303 K at 60 RPM**

| 0.1 M AMPD | | 2 M AMPD | | 2 M AMPD + 0.5 | | 0.5 M potassium taurate | |
|---|---|---|---|---|---|---|---|
| Presssure | Rate | Presssure | Rate | Presssure | Rate | Presssure | Rate |
| kPa | kmol/m².s | kPa | kmol/m².s | kPa | kmol/m².s | kPa | kmol/m².s |
| | | | | | | | |
| 6.61 | 2.45E-06 | 4.80 | 4.17E-06 | 7.18 | 5.39E-06 | 5.32 | 3.78E-06 |
| 11.33 | 3.95E-06 | 10.24 | 5.28E-06 | 11.39 | 7.22E-06 | 9.10 | 5.28E-06 |
| 16.13 | 4.33E-06 | 16.68 | 7.67E-06 | 15.55 | 8.56E-06 | 14.63 | 6.22E-06 |
| 20.92 | 5.11E-06 | 24.01 | 8.50E-06 | 21.08 | 1.15E-05 | 20.55 | 6.78E-06 |

### AMPD-Potassium taurate-CO₂-Water system

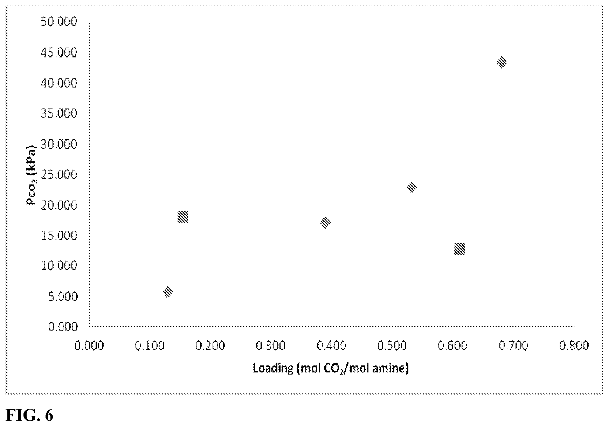

Blend solution containing 2 M AMPD and 0.5 M potassium taurate was prepared and used to generate the VLE data and is shown in Table 6 and Fig. 6.

**Table 6 VLE data for AMPD-potassium taurate-CO₂-water system**

| No. | Loading, α | Pco₂ | |
|---|---|---|---|
| | **mol/mol** | **atm** | **kPa** |
| 1 | 0.130 | 0.057 | 5.772 |
| 2 | 0.155 | 0.178 | 18.031 |
| 3 | 0.389 | 0.169 | 17.115 |
| 4 | 0.533 | 0.227 | 22.963 |
| 5 | 0.681 | 0.428 | 43.414 |
| 6 | 0.612 | 0.126 | 12.756 |

### Example B:

Data from blend solution containing 30 wt% AMP and 15 wt% Potassium Dimethyl Glycinate and remaining water is shown in Table 7 and Fig. 6.

**Table 7**

| Sr, No | Loading (mol/mol) | PCO2 (kPa) |
|---|---|---|
| 1 | 0.93 | 9.11 |
| 2 | 0.74 | 7.43 |
| 3 | 0.56 | 6.38 |
| 4 | 0.37 | 5.92 |
| 5 | 0.18 | 5.87 |
| 6 | 0.09 | 5.92 |
| 7. | 0.04 | 5.95 |

## Claims

1. A solvent for recovery of carbon dioxide from gaseous mixture, comprising:
(a) at least amine, wherein the amine is 2-amino-2-methyl-1,3-propanediol (APMD), and
(b) at least one salt, wherein the salt is potassium taurate,
wherein said solvent contains less than 75% by weight of water and has a single liquid phase, wherein the molar concentration of AMPD is between 0.5 M to 4 M and the total molar concentration of potassium taurate is 0.1 M to 3.5 M.

2. The solvent as claimed in Claim 1, wherein the molar concentration of AMPD is between 1 M to 3.5 M.

3. The solvent as claimed in Claim 1, wherein total molar concentration of potassium taurate is 0.1 M to 0.5 M and the amine is 1 M to 2 M.

4. A method for removing CO₂ from a stream, comprising the steps of:
(a) contacting the stream with a solvent having at least amine, , wherein the amine is 2-amino-2-methyl-1,3-propanediol (AMPD), and at least one salt, wherein the salt is potassium taurate, wherein said solvent contains less than 75% by weight of water, wherein the molar concentration of AMPD is between 0.5 M to 4 M and the total molar concentration of potassium taurate is 0.1 M to 3.5 M;
(b) allowing one specific solvent to absorb CO₂ at a temperature;
(c) regenerating one specific solvent from heating one specific solvent greater than 80 C.

5. The method as claimed in Claim 4, wherein the stream has a temperature between 40 C to 65 C.

6. The method as claimed in Claim 4, wherein heating the CO₂-rich solution for regenerating is included, which may occur preferably at a temperature of 90 C to 130 C.

7. The method as claimed in Claim 4, wherein AMPD has a concentration between 1 M to 3.5 M.

## Patentansprüche

1. Lösungsmittel zur Wiedergewinnung von Kohlendioxid aus einem Gasgemisch, umfassend:
(a) mindestens Amin, wobei das Amin 2-Amino-2-methyl-1,3-propandiol (APMD) ist, und
(b) mindestens ein Salz, wobei das Salz Kaliumtaurat ist,
wobei das Lösungsmittel weniger als 75 Gew.-% Wasser enthält und eine einzige flüssige Phase aufweist, wobei die molare Konzentration von AMPD 0,5 M bis 4 M beträgt und die gesamte molare Konzentration von Kaliumtaurat 0,1 M bis 3,5 M beträgt.

2. Lösungsmittel nach Anspruch 1, wobei die molare Konzentration von AMPD 1 M bis 3,5 M beträgt.

3. Lösungsmittel nach Anspruch 1, wobei die gesamte molare Konzentration von Kaliumtaurat 0,1 M bis 0,5 M beträgt und des Amins 1 M bis 2 M beträgt.

4. Verfahren zum Entziehen von CO₂ aus einem Strom, umfassend die folgenden Schritte:
(a) Inkontaktbringen des Stroms mit einem Lösungsmittel, das mindestens Amin, wobei das Amin 2-Amino-2-methyl-1,3-propandiol (AMPD) ist, und mindestens ein Salz, wobei das Salz Kaliumtaurat ist, aufweist, wobei das Lösungsmittel weniger als 75 Gew.-% Wasser enthält, wobei die molare Konzentration von AMPD 0,5 M bis 4 M beträgt und die gesamte molare Konzentration von Kaliumtaurat 0,1 M bis 3,5 M beträgt;
(b) Zulassen dessen, dass ein spezifisches Lösungsmittel CO₂ bei einer Temperatur absorbiert;
(c) Regenerieren eines spezifischen Lösungsmittels aus Erhitzen eines spezifischen Lösungsmittels bei mehr als 80 °C.

5. Verfahren nach Anspruch 4, wobei der Strom eine Temperatur von 40 °C bis 65 °C aufweist.

6. Verfahren nach Anspruch 4, wobei Erhitzen der CO₂-reichen Lösung zum Regenerieren inbegriffen ist, das bevorzugt bei einer Temperatur von 90 °C bis 130 °C vorkommen kann.

7. Verfahren nach Anspruch 4, wobei AMPD eine Konzentration von 1 M bis 3,5 M aufweist.

## Revendications

1. Solvant permettant de récupérer le dioxyde de carbone se trouvant dans un mélange gazeux, comprenant :
(a) au moins une amine, dans lequel l'amine est un 2-amino-2-méthyle-1,3-propanediol (APMD), et
(b) au moins un sel, dans lequel le sel est un taurate de potassium,
dans lequel ledit solvant contient moins de 75 % en poids d'eau et a une seule phase liquide, dans lequel la concentration molaire d'AMPD est comprise entre 0,5 M et 4 M et la concentration molaire totale de taurate de potassium est comprise entre 0,1 M et 3,5 M.

2. Solvant selon le revendication 1, dans lequel la concentration molaire d'AMPD est comprise entre 1 M et 3,5 M.

3. Solvant selon le revendication 1, dans lequel la concentration molaire totale de taurate de potassium est comprise entre 0,1 M et 0,5 M et l'amine est comprise entre 1 M et 2 M.

4. Procédé permettant de retirer le CO₂ se trouvant dans un flux, comprenant les étapes consistant à :
(a) mettre en contact le flux avec un solvant ayant au moins une amine, dans lequel l'amine est un 2-amino-2-méthyle-1,3-propanediol (AMPD), et au moins un sel, dans lequel le sel est un taurate de potassium, dans lequel ledit solvant contient moins de 75 % en poids d'eau, dans lequel la concentration molaire d'AMPD est comprise entre 0,5 M et 4 M et la concentration molaire totale de taurate de potassium est comprise entre 0,1 M et 3,5 M ;
(b) permettre à un solvant spécifique d'absorber le CO₂ à une température ;
(c) régénérer un solvant spécifique par le chauffage d'un solvant spécifique à plus de 80 °C.

5. Procédé selon le revendication 4, dans lequel le flux a une température comprise entre 40 °C et 65 °C.

6. Procédé selon le revendication 4, dans lequel est inclus le chauffage de la solution riche en CO₂ pour la régénération, ce qui a lieu de préférence à une température comprise entre 90 °C et 130 °C.

7. Procédé selon le revendication 4, dans lequel l'AMPD a une concentration comprise entre 1 M et 3,5 M.
